# EUROPEAN PATENT SPECIFICATION

(11) **EP 3 179 863 B1**
(45) Date of publication and mention of the grant of the patent: **24.07.2019**
(21) Application number: 15751244.3
(22) Date of filing: 06.08.2015
(51) Int. Cl.: A23G 3/36, A23G 3/42, A23G 3/54, C13B 30/02

(54) **CANDY AND MULTI-REGION CONFECTIONERY**
SÜSSWARE UND SÜSSIGKEIT MIT MEHREREN BEREICHEN
BONBON ET CONFISERIE À PLUSIEURS RÉGIONS

(30) Priority: 12.08.2014 JP 2014164585
(43) Date of publication of application: 21.06.2017
(73) Proprietor: Kasugai Seika Aioi Co., Ltd., Nagoya Aichi 451-0062 (JP)
(72) Inventor: KAMAKURA, Yoshimitsu, Singapore 619528 (SG); TAKITA, Osamu, Tokyo 141-0021 (JP)
(74) Representative: Enomoto, Kéi
(86) International application number: PCT/US2015/044057
(87) International publication number: WO 2016/025296

(56) References cited:
- EP-A1- 0 688 502
- EP-A1- 1 864 579
- WO-A1-91/07100
- WO-A1-2006/109456
- JP-A- 2011 109 998
- DATABASE GNPD [Online] MINTEL; December 2012 (2012-12), Anonymous: "Baked Caramel & Cafe Candies", XP002745605, Database accession no. 1956009
- SEPPALA A ET AL: "The effect of additives on the speed of the crystallization front of xylitol with various degrees of supercooling", EXPERIMENTAL THERMAL AND FLUID SCIENCE, ELSEVIER SCIENCE INC, NEW YORK, US, vol. 34, no. 5, 1 July 2010 (2010-07-01), pages 523-527, XP026945832, ISSN: 0894-1777, DOI: 10.1016/J.EXPTHERMFLUSCI.2009.11.005 [retrieved on 2009-11-18]
- CARPENTIER L ET AL: "Crystallization and glass properties of pentitols: Xylitol, adonitol, arabitols", JOURNAL OF THERMAL ANALYSIS AND CALORIMETRY, KLUWER ACADEMIC PUBLISHERS, DORDRECHT, NL, vol. 73, no. 2, 1 August 2003 (2003-08-01) , pages 577-586, XP019254703, ISSN: 1572-8943

## Description

### TECHNICAL FIELD

The present invention relates to a candy and a multi-region confectionery product, and more specifically relates to a xylitol-containing candy having a defined shape and a multi- region confectionery product comprising a region comprising the candy.

### BACKGROUND ART

In general, a xylitol-containing candy is manufactured via the following steps (for example, see Patent Literature 1).
(1) Xylitol and other sugars or polyols are heated to allow complete melting.
(2) Crystalline xylitol is added to the melt obtained in (1), and crystallization of xylitol is allowed to progress with stirring until the crystallization rate of xylitol reaches a predetermined level.
(3) (2) is molded, and then cooled to completely crystallize xylitol.

Patent Document 1: Japanese Unexamined Patent Application, Publication No. 2006-280215

EP 1 864 579 A1 describes a mouldable and cool tasting candy composition comprising a xylitol crystal layer sandwiched between two candy layers, a viscosity reducing agent and at least one component selected from the group consisting of a monosaccharide, disaccharide, or a sugar alcohol derived from a monosaccharide or disaccharide.

### DISCLOSURE OF THE INVENTION

### Problems to be Solved by the Invention

When the crystallization process is allowed to progress, a candy composition is in a form of slurry which contains crystalline xylitol, melted xylitol and melted polyols. A xylitol slurry obtained in (2) has higher viscosity in a case where the crystallization rate of xylitol is high. Therefore, molding the xylitol slurry is not easy, possibly resulting in reduced quality. On the other hand, in a case where the crystallization rate of xylitol is low, molding the xylitol slurry is easy, but it takes a long time until crystallization completes after molding.

The present invention is made in view of the above actual situation. The object of the present invention is to provide an approach in which a high quality xylitol-containing candy can be obtained in a short period of time.

### Means for Solving the Problems

The present inventors find that the above problem can be solved by selecting a composition of a xylitol-containing candy. Then the present invention has been completed. Specifically, the present invention provides the followings.

The present invention provides a candy composition comprising: a sugar composition portion comprising xylitol as a main component and a sorbitol, and a crystallization promoting agent promoting crystallization of the xylitol, wherein the content of the crystallization promoting agent is from 0.5 parts by mass to 10 parts by mass relative to 100 parts by mass of the candy composition, the crystallization promoting agent being a substance which leaves solid residues in a melt of the sugar composition portion when a powder of the crystallization promoting agent in an amount of 0.5g is added to 100 g of the melt maintained at 90°C, and stirred for 30 minutes, wherein the crystallization promoting agent is selected from a tea powder, a coffee powder, a cocoa powder, a talc powder, a calcium carbonate powder, a silicic anhydride powder, a magnesium carbonate powder, and combinations thereof.

Moreover, the present invention provides a multi-region confectionery product comprising a defined shaped region comprising a solidified material of the candy composition as described above.

Furthermore, the present invention provides the said multi-region confectionery product, wherein at least a portion of the defined shaped region is exposed.

### Effects of the Invention

By adding a crystallization promoting agent in addition to xylitol, an increased viscosity of slurry can be controlled, and the crystallization of xylitol can be efficiently achieved in a short period of time. According to the present invention, a high quality xylitol- containing candy can be obtained in a short period of time.

### BRIEF DESCRIPTION OF THE DRAWINGS

Fig. 1 shows a cross-sectional view of a multi-region confectionery product 10 according to one embodiment of the present invention.
Fig. 2 shows multi-region confectionery products according to modified versions of the present invention.
Fig. 3 shows an example of methods for manufacturing the multi-region confectionery product shown in Fig. 1.
Fig. 4 shows results from the comparison of Example 1 with Comparative Example 1 in terms of the crystallization rate of xylitol.
Fig. 5 shows results from the comparison of Example 2 with Comparative Example 1 in terms of the crystallization rate of xylitol.
Fig. 6 shows results from the comparison of Comparative Example 1 with Comparative Example 2 in terms of the crystallization rate of xylitol.

### EXPLANATION OF REFERENCE NUMERALS 10,

10A, 10B and 10C Multi-region confectionery product (candy)
20, 20A, 20B and 20C First region
21 First region melt
30, 30A, 30B and 30C Second region
31 Second region melt
33 Lower surface
34 Upper surface
37 Side
40 First region
41 First region melt
200 Deposit die (Molding die)
210 Die body
230 Rod-like Structure

### PREFERRED MODE FOR CARRYING OUT THE INVENTION

Below, embodiments of the present invention will be described.

### Candy composition

A candy composition according to the present invention contains a sugar composition portion comprising xylitol as a main component and sorbitol, and a crystallization promoting agent promoting crystallization of the xylitol.

### Sugar composition portion

The sugar composition portion comprises xylitol as a main component and sorbitol.

### Xylitol

Xylitol is known as a naturally occurring substitute of sweetener. Xylitol, which shows an endothermic effect when dissolved, can provide cool feeling in the oral cavity. Further, xylitol has relatively high fluidity compared with other polyols even when the temperature of a melt is low. Therefore, xylitol is widely used as a component to be
included in a candy composition.

As used herein, the term "main component" refers to a carbohydrate having the largest content among two or more carbohydrates contained in a sugar composition portion. That is, in the present invention, xylitol is a carbohydrate having the largest content among two or more carbohydrates contained in a candy composition. There is no particular limitation for the content of xylitol, but the content is preferably from 50 parts by mass to 98 parts by mass relative to 100 parts by mass of a sugar composition portion in a candy composition, more preferably from 70 parts by mass to 94 parts by mass. If the content of xylitol is too small, it may take a long time to stir xylitol slurry and promote crystallization, and may also take a long time until cooled and solidified, resulting in significantly decreased productivity. If the content of xylitol is too large, it may be too rapidly crystallized to be molded.

### Different carbohydrate

The candy composition comprises at least one or more carbohydrates different from xylitol in a sugar composition portion. The candy composition according to the present invention comprises sorbitol as a different carbohydrate.

The following description regarding carbohydrates other than sorbitol is provided by way of illustration, (for example, a sugar, a sugar alcohol other than xylitol).

The different carbohydrate may be a sugar or a sugar alcohol as long as it is not xylitol. In a case where the different carbohydrate comprises a monosaccharide, the monosaccharide is a polyhydroxy aldehyde or polyhydroxy ketone derivative having three or more carbon atoms, including, for example, glucose, fructose, erythrose, xylose, sorbose, galactose and other isomerized sugars. They may be used alone or as a mixture of two or more. Use of at least one monosaccharide selected from grape sugar (glucose), fruit sugar (fructose), erythrose and wood sugar (xylose) is preferred because rapid crystallization of xylitol slurry may be prevented, and good handling properties, easy availability and low cost may also be provided.

In a case where the different carbohydrate comprises a disaccharide, the disaccharide is a polyhydroxy aldehyde or polyhydroxy ketone derivative having two monosaccharides joined together, including, for example, sucrose, maltose, lactose, paratinose and other isomerized sugars. They may be used alone or as a mixture of two or more. Use of at least one disaccharide selected from cane sugar (sucrose) having glucose and fructose jointed together, malt sugar (maltose), milk sugar (lactose) and paratinose is preferred because rapid crystallization of xylitol slurry may be prevented, and good handling properties, easy availability and low cost may also be provided.

The different carbohydrate may comprise a trisaccharide and/or an oligosaccharide. However, trisaccharides and oligosaccharides have large molecular weight, and their ability of preventing increased viscosity of a sugar solution upon heating and rapid crystallization of xylitol slurry is less effective compared with monosaccharides and disaccharides. Therefore, in a case where the different carbohydrate comprises a sugar, the sugar preferably comprises a monosaccharide and/or a disaccharide.

In a case where the different carbohydrate comprises a sugar alcohol, the sugar alcohol is a chain polyhydric alcohol obtainable by reducing (hydrogenizing) carbonyl groups of aldehyde and ketone in a saccharide, including, for example, sorbitol, erythritol, mannitol, galactitol, maltitol, reduced balatinose and lactitol. They may be used alone or as a mixture of two or more.

Among others, sugar alcohols prepared using, as raw materials, monosaccharides such as sorbitol obtainable by subjecting grape sugar (glucose) to a reduction reaction, mannitol as an isomer and erythritol obtainable by subjecting erythrose to a reduction reaction are preferred in that they can effectively prevent rapid crystallization of xylitol slurry. Reduced malt sugar (maltitol) obtainable by subjecting malt sugar (maltose) to a reduction reaction, reduced balatinose obtainable by subjecting paratinose to a reduction reaction, lactitol obtainable by subjecting milk sugar (lactose) to a reduction reaction and the like are also effective in the present invention.

As described above, low molecular weight monosaccharides and sugar alcohols thereof are most preferred as the different carbohydrates. Nonetheless, comparable effects can be obtained from disaccharides and sugar alcohols thereof.

There is no particular limitation for the content of the different carbohydrate, but the content is preferably from 2 parts by mass to 50 parts by mass relative to 100 parts by mass of a sugar composition portion in a candy composition, and more preferably from 6 parts by mass to 30 parts by mass. If the content of the different carbohydrate is too small, xylitol slurry may be too rapidly crystallized to be molded. If the content of the different carbohydrate is too large, it may take a long time to stir xylitol slurry and promote crystallization, and may also take a long time until cooled and solidified, resulting in significantly decreased productivity.

### Crystallization promoting agent

The candy composition according to the present invention contains a crystallization promoting agent which promotes crystallization of xylitol. As used herein, the term "crystallization promoting agent" refers to a substance which leaves solid residues in a melt of the sugar composition portion according to the present invention when a powder of the crystallization promoting agent in an amount of 0.5g is added to the melt maintained at 90°C, and stirred for 30 minutes.

Crystallization promoting agents include materials selected from a tea powder, a coffee powder, a cocoa powder, a talc powder, a calcium carbonate powder, a silicic anhydride powder, a magnesium carbonate powder and combination thereof. Meanwhile, citric acid, malic acid and ascorbic acid do not fall under the category of a crystallization promoting agent according to the present invention.

Methods of determining if a substance falls under the category of a crystallization promoting agent according to the present invention, i.e., if it leaves solid residues in a melt of a sugar composition portion when a powder of the crystallization promoting agent in an amount of 0.5g is added to 100 g of the melt maintained at 90°C, and stirred for 30 minutes include visual inspection and observation under a microscope or a light microscope.

The content of the crystallization promoting agent is from 0.5 parts by mass to 10 parts by mass relative to 100 parts by mass of a sugar composition portion in a candy composition, and preferably from 1 part by mass to 5 parts by mass. If the content of the crystallization promoting agent is too small, crystallization of xylitol may not appropriately be promoted, and increased viscosity of slurry may be suppressed, and an advantageous effect according to the present invention, which is to efficiently promote crystallization of xylitol in a short period of time, may not sufficiently be achieved. If the content of the crystallization promoting agent is too large, the taste (sweetness, cool feeling and the like) of xylitol may not be sufficiently obtained, and graininess may occur, resulting in spoiled sucking feeling of candy.

### Other components

Although not an essential configuration, the candy composition may further comprise an optional component in addition to the sugar composition portion comprising xylitol and sorbitol, and a crystallization promoting agent. Such optional components include warming agents, cooling agents, stimulants, flavoring agents, sweetening agents, acidulants, bittering agents, salting agents, surfactants, expiration refrigerants, antimicrobial agents, anti-calculus agents, anti-dental plaque agents, fluoride compounds, recalcifying agents, drugs, micronutrients, throat care agents, tooth whitening agents, energy enhancing agents, concentration improving agents, appetite suppressing agents, coloring agents and other components.

### Multi-region confectionery product

The multi-region confectionery product according to the present invention comprises a defined shaped region comprising a solidified material of the candy composition. Although not an essential configuration, in the multi-region confectionery product according to the present invention, at least a portion of the defined shaped region is preferably exposed.

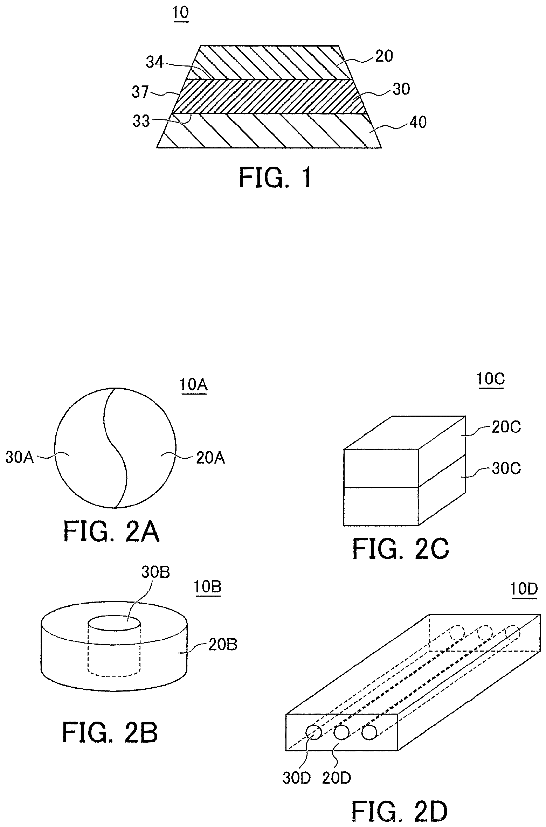

Fig. 1 shows a schematic view of the candy 10 as the multi-region confectionery product according to one embodiment of the present invention. The candy 10 comprises a first region 20 and a second region 30, and the first region 20 and the second region 30 are adjacently arranged. The candy 10 further comprises a first region 40, and upper and lower sides 34, 37 of the second region 30 are covered with the first regions 20 and 40. As a result, at least a portion of the second region 30 is exposed.

The first regions 20, 40 comprises a widely known candy, and there is no particular limitation for the composition thereof. The first regions 20, 40 may have mutually different compositions or the same composition. The second region comprises a solidified material of the candy composition according to the present invention, which contains the above xylitol and the above crystallization promoting agent.

As used herein, the term "defined shape" means not to be a non-defined shape such as liquid and powder, and encompasses a glass body and a semi-solid without limited to a solid. At least a portion of the second region may be exposed in a case where it has a defined shape.

As long as the above requirements are satisfied, there is no particular limitation for the structure of the multi-region confectionery product according to the present invention, and any number, configuration, shape, ratio and the like of the first region and the second region may be used.

Fig. 2 shows multi-region confectionery products according to modified embodiments of the present invention. A candy 10A in Fig. 2 (A) (top view) differs from the above embodiment in that it is cylindrical, and the first region comprises a reference number 20A only. A candy 10B in Fig. 2 (B) differs from the candy 10A in that it is cylindrical, and a cylindrical second region 30B is surrounded by a doughnut-like first region 20B. A candy 10C in Fig. 2 (C) differs from the candy 10B in that it is a rectangular parallelepiped, and comprises a rectangular parallelepiped-like first regions 20C and second region 30C. A candy 10D in Fig. 2 (D) differs from the candy 10C in that a cylindrical second region 30B is formed inside a rectangular parallelepiped-like first region 20D.

### Method of manufacturing multi-region confectionery product

The method of manufacturing a multi-region confectionery product according to the present invention comprises the steps of: melting and then solidifying a first confectionery composition to manufacture a first region; melting and then solidifying a confectionery composition according to the present invention comprising xylitol and a crystallization promoting agent (hereinafter, also referred to as a "second confectionery composition") to manufacture a second region.

The method of manufacturing a multi-region confectionery product according to the present invention may be performed by any processes as long as the above requirements are satisfied. For example, the followings may be used: the stamping process (the whole confectionery product in which a first region is combined with a second region is stretched, and then torn off by stamping with a die having desired dimensions. Note that since a confectionery product before and after stretching is already in a defined shape, which correspond to articles after solidification), the deposit process (a step of depositing a molten mixture into a molding die and then performing solidification is repeated in sequence to form a laminated multi-region confectionery product). However, the deposit method is preferred because a smoother surface can be formed.

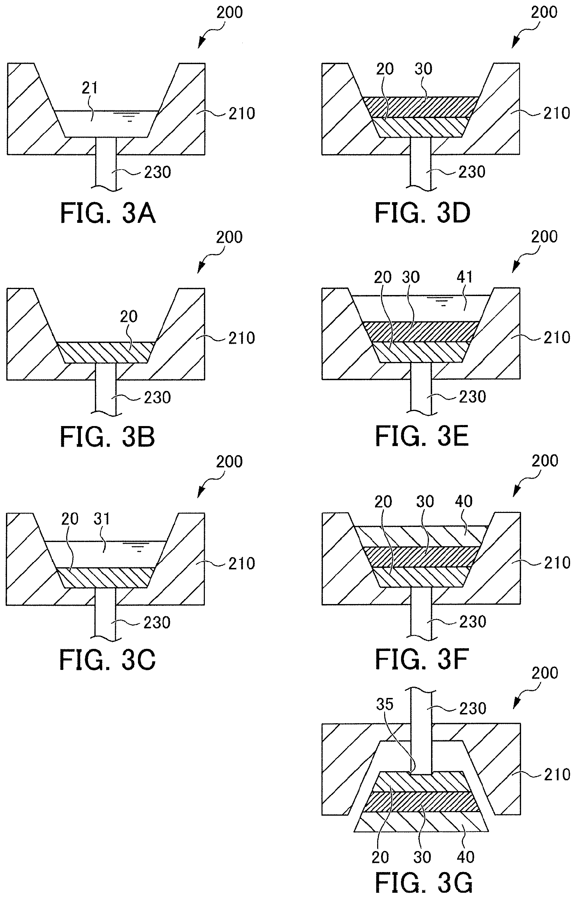

Accordingly, a method of manufacturing the multi-region confectionery product 10 according to the above embodiment using the deposit method will be described with referring to Fig. 3. First, a first region melt 21 in which a first confectionery composition is melted is supplied into a die body 210 of a molding die 200 (Fig. 3 (A)). While this configuration is maintained, the first region melt 21 is cooled and solidified to manufacture a first region 20 (Fig. 3 (B)). Next, a second region melt 31 in which a second confectionery composition is melted is supplied onto the first region 20 (Fig. 3 (C)), and is cooled and solidified to manufacture a second region 30 (Fig. 3 (D)).

The second region melt 31 is hard and adherent in a case where a proportion of xylitol crystals is high. Therefore, when the second region melt 31 is supplied onto the first region 20, the second region melt 31 may not be uniformly distributed throughout on the first region 20, possibly resulting in defective products. On the other hand, in a case where the proportion of xylitol crystals is low, the second region melt 31 is uniformly distributed throughout on the first region 20, but it takes time for the second region melt 31 to be solidified after that.

The time until the second region melt 31 is solidified can be shortened, and the production of defective products can be reduced because the second region melt 31 contains xylitol and a crystallization promoting agent.

Subsequently, a first region melt 41 is supplied onto the second region 30 (Fig. 3 (E)), and cooled and solidified to manufacture a first region 40 (Fig. 3 (F)). In this way, the multi-region confectionery product 10 according to the above embodiment is manufactured. Then, in general, the multi-region confectionery product 10 is pushed with a rod-like structure 230 provided at the bottom of the die body 210 to be dissociated from the die body 210 for recovery (Fig. 3 (G)). In this process, a dent (not shown) is formed near the center of an upper surface of the first region 20.

Modified versions shown in Fig. 2 are also manufactured in a similar way. However, in particular, in a case where a long candy is cut so that a surface of the second region is exposed after this long candy is molded, the long candy can be cut only after the second region melt 31 is solidified. According to the present invention, the time until the second region melt 31 is solidified can be shortened. Therefore, the time until the long candy is cut so that a surface of the second region is exposed after this long candy is molded can be shortened.

### EXAMPLES

Below, the present invention will be further described in detail with reference to Examples,

### Test Example 1

### Measurement of crystallization speed

### Example 1 and Comparative Example 1

**Table 1**

| | Crystallization promoting agent |
|---|---|
| Example 1-1 | Green tea powder |
| Example 1-2 | Uncalcinated scallop calcium powder |
| Example 1-3 | Uncalcinated coral calcium powder |
| Example 1-4 | Calcium carbonate powder |
| Comparative Example 1 | None |

With reference to Table 1, crystallization promoting agents are as follows
Green tea powder (Product name: Sterilized Uji green tea powder MOK-5, Kyoeiseicha Co., Ltd.)
Uncalcinated scallop calcium powder (Product name: Scallop powder, N. C. Corporation)
Uncalcinated coral calcium powder (Product name: Coral bio-PW-S, Coral Biotech Incorporated)
Calcium carbonate powder (Product name: heavy calcium carbonate Aragen, Calfine Co.,Ltd)

### Examples 1-1 to 1-9

To allow complete melting, 823.5 g crystalline xylitol (Product name: XYLITOL C, Danisco) and 67.5 g crystalline sorbitol (Product name: NEOSORB P20/60, Roquette) were heated to 120°C. The resulting melt was cooled with stirring in an oil bath at 80°C, and 9 g of the above crystalline xylitol was added when the temperature was 82°C to initiate crystallization of xylitol. Note that temperature herein is to be measured with a properly calibrated piercing digital thermometer.

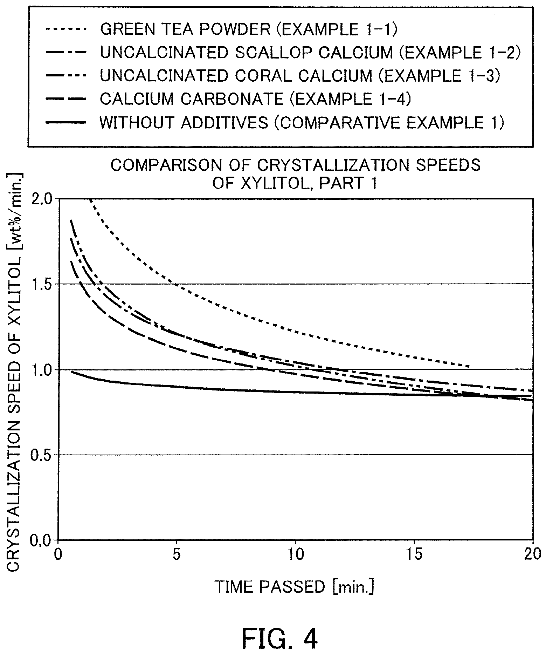

Subsequently, the amount of crystals in the xylitol slurry was measured every one minute, and when the amount of crystals reached 25 mass%, 27 g of a crystallization promoting agent shown in Table 1 was added. As used herein, the amount of crystals in the xylitol slurry is to be computed from the crystal particle size distribution as measured with FBRM (Mettler-Toledo International Inc.). Further, the addition amount of a crystallization promoting agent corresponds to 3 parts by mass relative to 100 parts by mass of the xylitol slurry. After adding a crystallization promoting agent, the amount of crystals in the xylitol slurry was measured every one minute. Fig. 4 shows the results in which the horizontal axis is the time (unit: minute) passed after adding a crystallization promoting agent, and the vertical axis is the crystallization speed (unit: wt%/min.) of xylitol.

### Comparative Example 1

A candy was prepared in the same way as in Examples 1-1 to 1-9 except that 27g of a crystallization promoting agent was not added. Fig. 4 shows the results in which the horizontal axis is the time (unit: minute) passed after the amount of crystals reached 25 mass%, and the vertical axis is the crystallization speed (unit: wt%/min.) of xylitol.

When each crystallization promoting agent in Example 1 is used, the crystallization speed of xylitol is large compared with a case where a crystallization promoting agent is not used. That is, the time required to crystallize xylitol is reduced by adding a crystallization promoting agent.

### Example 2 and Comparative Example 1

**Table 2**

| | Crystallization promoting agent |
|---|---|
| Example 2-1 | Silicic anhydride powder |
| Example 2-2 | Magnesium carbonate powder |
| Comparative Example 1 | None |

With reference to Table 2, crystallization promoting agents are as follows. Silicic anhydride powder (Product name: Carplex® FPS-500, DSL. Japan Co., Ltd.)
Magnesium carbonate powder (Product name: Food additive magnesium carbonate, Tomita Pharmaceutical Co., Ltd.)

### Examples 2-1 and 2-2

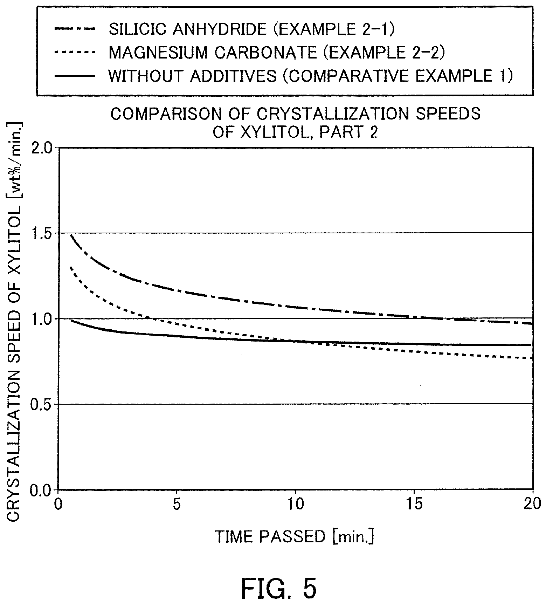

A candy was prepared in the same way as in Example 1-1 except that 9 g of a crystallization promoting agent shown in Table 1 was added. The addition amount of a crystallization promoting agent corresponds to 1 part by mass relative to 100 parts by mass of the xylitol slurry. Fig. 5 shows the results in which the horizontal axis is the time (unit: minute) passed after adding a crystallization promoting agent, and the vertical axis is the crystallization speed (unit: wt%/min.) of xylitol. As reference, results from Comparative Example 1 are also shown in Fig. 5.

Similarly, in a case where a silicic anhydride powder, a magnesium carbonate powder are used as a crystallization promoting agents, when each crystallization promoting agent in Example 2 is used, the crystallization speed of xylitol is larger as compared with a case where a crystallization promoting agent is not used. That is, the time required to crystallize xylitol is reduced by adding a crystallization promoting agent.

### Comparative Example 1 and Comparative Example 2

**Table 3**

| | Material name |
|---|---|
| Comparative Example 1 | None |
| Comparative Example 2- | Citric acid monohydrate powder |
| Comparative Example 2- | Malic acid powder |
| Comparative Example 2- | Ascorbic acid powder |

With reference to Table 3, crystallization promoting agents are as follows.

Citric acid monohydrate powder (Product name: Citric acid Fuso, Fuso Chemical Co., Ltd.)
Malic acid powder (Product name: Malic acid Fuso, Fuso Chemical Co., Ltd.)
Ascorbic acid powder (Product name: Ascorbic Acid, Weisheng Pharmaceutical)

### Comparative Examples 2-1 to 2-3

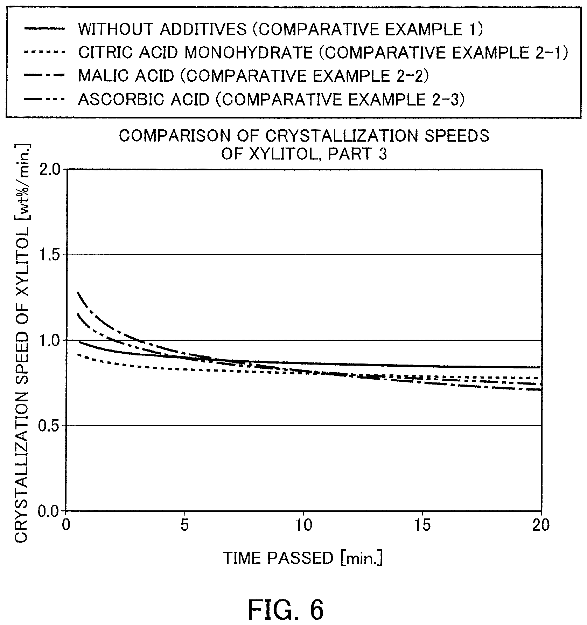

A candy was prepared in the same way as in Example 1-1 except that the crystallization promoting agents were replaced with materials shown in Table 3. Fig. 6 shows the results in which the horizontal axis is the time (unit: minute) passed after adding a crystallization promoting agent, and the vertical axis is the crystallization speed (unit: wt%/min.) of xylitol. As reference, results from Comparative Example 1 are also shown in Fig. 6.

In a case where materials according to Comparative Examples 2-1 to 2-3 are included, the crystallization speed is larger than that of Comparative Example 1 immediately after the addition, but becomes comparable to that of Comparative Example 15 minutes after the addition, and becomes smaller than that of Comparative Example 1 after that. Therefore, even if a material according to Comparative Example 2 is added, the time required to crystallize xylitol cannot be shortened.

### Test Example 2 Solubility evaluation

To allow complete melting, 92.5 g of the above crystalline xylitol and 7.5 g of the above crystalline sorbitol were heated to 120°C. The resulting melt was cooled to 90°C, and kept warm in a 90°C oil bath. To this, 0.5 g of each of materials according to Examples 1-1 to 1-4, 2-1 and 2-2, and Comparative Examples 2-1 to 2-3 was added, and stirred for 30 minutes. Then whether the additive remains in the melt was visually checked. Results are shown in Table 4.

**Table 4**

| Material name | Solubility evaluation |
|---|---|
| Example 1-1: Green tea powder | With residues |
| Example 1-2: Uncalcinated scallop calcium powder | |
| Example 1-3: Uncalcinated coral calcium powder | |
| Example 1-4: Calcium carbonate powder | |
| Example 2-1: Silicic ahydride powder | |
| Comparative Example 2-1: Citric acid monohydrate powder Comparative Example 2-2: Malic acid powder | Without residues |

When 0.5 g of each of the powders according to Examples was added to a melt maintained at 90°C comprising 92.5 g of crystalline xylitol and 7.5 g of crystalline sorbitol, and stirred for 30 minutes, solid residues were observed in the melt. In contrast, when 0.5 g of each of the powders according to Comparative Examples was added to the above melt, and stirred for 30 minutes, solid residues were not observed in the melt.

This shows that when 0.5 g of a powdered material is added to a melt maintained at 90°C comprising 92.5 g of crystalline xylitol and 7.5 g of crystalline sorbitol, and stirred for 30 minutes, if solid residues are present in the melt, that material is a "crystallization promoting agent" as used herein.

### Test Example 3 Productivity evaluation

**Table 5**

| | Xylitol Portion | Temperature at xylitol molding |
|---|---|---|
| Example 3 | With green tea powder | 88°C |
| Comparative Example 3- | Without green tea | 88°C |
| Comparative Example 3- | Without green tea | 86°C |

### Example 3

### Preparation of candy portion

After boiling down 132.4g of reduced maltose starch syrup to 165°C, water was evaporated under -0.09 MPa to obtain 100g of a candy raw material. The material was cooled to 150°C, and then 0.2 g of a natural green coloring agent from Gardenia (Product name: Nichino Color Green R-40, Nichno Kagaku Kogyo Co., Ltd.) and 0.2 g of a powdered green tea flavoring agent (Takasago International Corp.) were added, and stirred well.

### Preparation of xylitol portion

To allow complete melting, 92.5 g of crystalline xylitol and 7.5 g of crystalline sorbitol were heated to 120°C. The resulting melt was cooled to 80°C, and stirred well to allow xylitol crystals to precipitate until the amount of the crystals became 25 mass%. To this, 3 g of the above green tea powder was added, and stirred well.

### Molding

Into an elliptical metal molding die for candy, 1.3 g of a melt of the above candy portion was poured. After the candy portion was sufficiently solidified, 0.8 g of the above xylitol portion kept warm at 88°C was poured over it. Subsequently, 1.9 g of the above candy portion was poured over it, and cooled at 20°C for 10 minutes, and then removed from the molding die to give a multi-region confectionery product according to Example 3.

### Comparative Example 3-1

A multi-region confectionery product according to Comparative Example 3-1 was obtained in the same way as in Example 3 except that the green tea powder was not added to the xylitol portion.

### Comparative Example 3-2

A multi-region confectionery product according to Comparative Example 3-2 was obtained in the same way as in Example 3 except that the green tea powder was not added to the xylitol portion, and the temperature when xylitol was poured into the molding die was 86°C.

### Evaluation

Each of the multi-region confectionery products according to Example 3, Comparative Example 3-1 and Comparative Example 3-2 was tested if it was removable from the molding die, and if the xylitol portion was distributed throughout the molding die. Results are shown in Table 6.

**Table 6**

| | Removable from a mold? | Is the xylitol portion distributed throughout the molding die? |
|---|---|---|
| Example 3 | All articles were removable. | The xylitol portions of all the articles were distributed throughout the molding dies. |
| Comparative Example 3 | 20% of the articles were not removable from molding dies. | The xylitol portions of all the articles were distributed throughout the molding dies. |
| Comparative Example 4 | All articles were removable. | The xylitol portions of 30% of the articles were not distributed throughout the molding dies. |

In Example 3, all articles were removable, and the xylitol portion of each of the articles was distributed throughout the molding die. From Comparative Example 1, the crystallization of the xylitol portion was found to be insufficient in Comparative Example 3. Therefore, the above was achieved probably because the crystallization speed was enhanced, and the crystallization of xylitol in the manufacturing process was well promoted by adding the green tea powder without developing adhesiveness.

In contrast, in Comparative Example 3, 20% of the articles were not removable from the molding die. Observation of the xylitol portions of the non-removable articles revealed insufficient crystallization and the development of adhesiveness. This adhesiveness caused a problem of non-removability from a molding die.

In Comparative Example 4, all articles were removable, but the xylitol portions of 30% of the articles were not distributed throughout the molding dies.

## Claims

1. A candy composition comprising:
a sugar composition portion comprising xylitol as a main component and sorbitol, and a crystallization promoting agent promoting crystallization of the xylitol, wherein the content of the crystallization promoting agent is from 0.5 parts by mass to 10 parts by mass relative to 100 parts by mass of the candy composition,
the crystallization promoting agent being a substance which leaves solid residues in a melt of the sugar composition portion when a powder of the crystallization promoting agent in an amount of 0.5g is added to 100 g of the melt maintained at 90°C, and stirred for 30 minutes, wherein the crystallization promoting agent is selected from a tea powder, a coffee powder, a cocoa powder, a talc powder, a calcium carbonate powder, a silicic anhydride powder, a magnesium carbonate powder, and combinations thereof.

2. A multi-region confectionery product comprising a defined shaped region comprising a solidified material of the candy composition according to claim 1.

3. The multi-region confectionery product according to claim 2, wherein at least a portion of the defined shaped region is exposed.

## Patentansprüche

1. Süßigkeitszusammensetzung, die Folgendes umfasst:
einen Zuckerzusammensetzungsteil, der Xylitol als Hauptkomponente und Sorbitol umfasst, und ein die Kristallisation unterstützendes Mittel, das die Kristallisation des Xylitols unterstützt, wobei der Gehalt des die Kristallisation unterstützenden Mittels von 0,5 Massenteile bis 10 Massenteile in Bezug auf 100 Massenteile der Süßigkeitszusammensetzung beträgt,
wobei das die Kristallisation unterstützende Mittel eine Substanz ist, die feste Rückstände in einer Schmelze des Zuckerzusammensetzungsteils hinterlässt, wenn ein Pulver des die Kristallisation unterstützenden Mittels in einer Menge von 0,5 g zu 100 g der Schmelze zugegeben wird, die bei 90 °C gehalten wird und für 30 Minuten gerührt wird, wobei das die Kristallisation unterstützende Mittel aus Folgenden ausgewählt ist: einem Teepulver, einem Kaffeepulver, einem Kakaopulver, einem Talkumpulver, einem Calciumcarbonat-Pulver, einem Kieselsäureanhydrid-Pulver, einem Magnesiumcarbonat-Pulver und Kombinationen davon.

2. Mehrbereichssüßwarenprodukt, das einen definierten geformten Bereich umfasst, der ein verfestigtes Material der Süßigkeitszusammensetzung nach Anspruch 1 umfasst.

3. Mehrbereichssüßwarenprodukt nach Anspruch 2, wobei mindestens ein Teil des definierten geformten Bereichs freigelegt ist.

## Revendications

1. Composition de bonbon, comprenant :
une portion de composition de sucre comprenant du xylitol comme composant principal et du sorbitol, et un agent favorisant la cristallisation, qui favorise la cristallisation du xylitol, où la teneur en agent favorisant la cristallisation va de 0,5 partie en masse à 10 parties en masse par rapport à 100 parties en masse de la composition de bonbon,
l'agent favorisant la cristallisation étant une substance qui laisse des résidus solides dans une masse fondue de la portion de composition de sucre lorsqu'une poudre de l'agent favorisant la cristallisation selon une quantité de 0,5 g est ajoutée à 100 g de la masse fondue maintenue à 90°C, et agitée pendant 30 minutes, où l'agent favorisant la cristallisation est choisi parmi une poudre de thé, une poudre de café, une poudre de cacao, une poudre de talc, une poudre de carbonate de calcium, une poudre d'anhydride silicique, une poudre de carbonate de magnésium, et des combinaisons de celles-ci.

2. Produit de bonbon à régions multiples, comprenant une région de forme définie comprenant un matériau solidifié de la composition de bonbon selon la revendication 1.

3. Produit de bonbon à régions multiples selon la revendication 2, dans lequel au moins une portion de la région de forme définie est exposée.
